# FASCICULE DE BREVET EUROPEEN

(11) **EP 0 430 801 B1**
(45) Date de publication et mention de la délivrance du brevet: **29.06.1994**
(21) Numéro de dépôt: 90403368.5
(22) Date de dépôt: 28.11.1990
(51) Int. Cl.: B64D 47/00, B64D 15/02

(54) **Dispositif d'évacuation, dans l'atmosphère, d'un jet de fluide chaud libéré par un clapet de surpression d'un aéronef**
Einrichtung zum Auslass in die Atmosphäre eines von einem Flugzeugüberdruckventil freigelassenen warmen Flüssigkeitsstroms
Device for discharging into the atmosphere a warm fluid jet released from an overpressure valve of an aircraft

(30) Priorité: 29.11.1989 FR 8915696
(43) Date de publication de la demande: 05.06.1991
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Derouet, Patrick Roger Jean, F-77111 Soignolles en Brie (FR); Lemonnier, Michel Serge Pierre, F-91130 Ris Orangis (FR); Tourneboeuf, Jean, F-77000 Vaux Le Penil (FR); Welaratne, Roger Upali, F-77000 Melun (FR)
(74) Mandataire: Berrou, Paul

(56) Documents cités:
- EP-A- 0 191 717
- US-A- 3 182 855
- US-A- 4 402 516
- PATENT ABSTRACTS OF JAPAN vol. 8, no. 197 (M-324) 11 septembre 84,& JP-A-59 086770 (HITACHI KINZOKU) 10 novembre 82,

## Description

La présente invention concerne le domaine des aéronefs.

Elle concerne plus particulièrement un dispositif pour évacuer dans l'atmosphère un jet de fluide éventuellement libéré par un clapet de surpression prévu dans un circuit de fluide chaud sous pression d'un aéronef.

Un aéronef comporte plusieurs circuits de fluide chaud sous pression reliant une source chaude constituée par un prélèvement sur un moteur à un point d'utilisation, dont la pression est réglée au moyen d'une vanne de régulation placée en amont du circuit. Le circuit d'air chaud servant au dégivrage en est un exemple. Ce type de circuit comporte habituellement un clapet de surpression destiné à dévier une partie de l'air comprimé vers l'atmosphère dans le cas où la vanne de régulation se bloquerait en position ouverte, de façon à éviter une surpression dangereuse. Cependant, pour des raisons aérodynamiques, on ne peut pas installer, à l'extérieur des nacelles qui enveloppent les moteurs, autant de sorties de décharge qu'il y a de circuits d'air comprimé à surveiller autour de chaque turboréacteur. C'est pourquoi on regroupe ces sorties entre le turboréacteur et la nacelle, ce qui entraîne une canalisation de décharge de grande longueur.

Mais ceci conduit à un autre risque. L'air comprimé qui sort du clapet de surpression, en cas d'ouverture de celui-ci, est chaud et par le fait même dangereux pour l'environnement des canalisations de décharge : les équipements divers, les conduits de fluide, les câblages électriques, la paroi de la nacelle, etc... .

Le but de la présente invention est de proposer un dispositif pour évacuer, dans l'atmosphère, un jet de fluide éventuellement libéré par un clapet de surpression prévu dans un circuit de fluide chaud sous pression d'un aéronef, qui permette de conserver les qualités aérodynamiques de l'aéronef et qui évite de détériorer les équipements de l'aéronef, en cas de fonctionnement du clapet de surpression.

Le but est atteint selon l'invention par le fait que le clapet de surpression est disposé près et à l'intérieur de la paroi de la nacelle, qui enveloppe le moteur, de telle manière que l'éventuel jet de fluide libéré par ledit clapet soit dirigé vers ladite paroi, et par le fait qu'il est prévu dans ladite paroi, à l'endroit de l'impact dudit jet, un orifice obturé par un bouchon consomptible destiné à fondre, au moins partiellement, sous l'action de la chaleur dégagée par ledit jet, permettant, alors, l'évacuation dudit jet par au moins une partie dudit orifice.

Avantageusement on utilise un bouchon consomptible constitué d'un treillis métallique noyé dans un matériau fusible. Le matériau fusible peut avantageusement être du silicone.

Avantageusement, on protège le voisinage du jet de fluide en prévoyant sur la face interne de la nacelle un manchon dont une extrémité entoure ledit orifice et dont l'autre extrémité se situe au voisinage du clapet de surpression.

Grâce à cette disposition du clapet de surpression et à la présence du bouchon consomptible, la nacelle conserve ses qualités aérodynamiques tant que le clapet de surpression ne s'est pas ouvert. De plus, le trajet du jet de fluide déchargé est court et protégé par le manchon. Enfin, une inspection visuelle de la nacelle à l'escale permet de détecter la panne.

D'autres avantages et caractéristiques de l'invention apparaitront à la lecture de la description suivante faite à titre d'exemples et en référence aux dessins annexés dans lesquels :

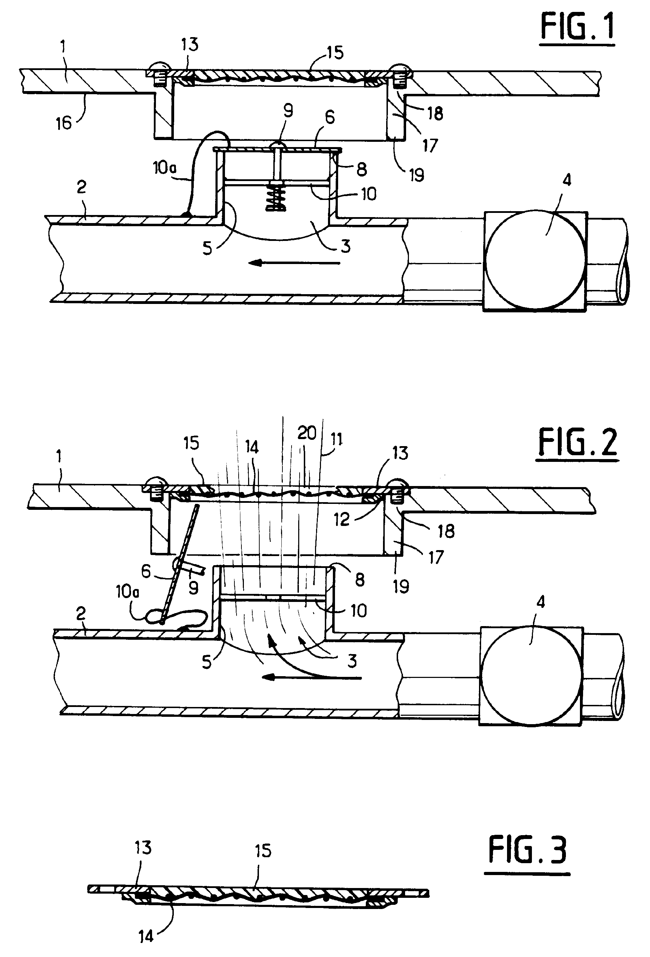

la figure 1 représente un schéma de principe du dispositif selon l'invention,
la figure 2 représente le même dispositif avec le clapet de surpression ouvert, et
la figure 3 est une coupe du bouchon obturant l'orifice de la paroi de la nacelle.

Sur le dessin, on voit la paroi 1 d'une nacelle d'un aéronef au voisinage de laquelle se trouve une canalisation 2 d'un circuit de fluide chaud sous pression, par exemple un circuit d'air chaud destiné au dégivrage de l'aéronef. Un clapet de surpression 3 est prévu en aval d'une vanne de régulation de pression 4. Ce clapet de surpression 3 comporte un puits 5 communiquant avec la canalisation 2 et recouvert de façon étanche par une membrane métallique 6. Cette membrane 6 est maintenue de façon étanche sur le pourtour extérieur 8 du puits 5 à l'aide d'un rivet autodestructible 9 coopérant de manière connue avec des entretoises 10 prévues radialement dans le puits 5. Un filin de retenue 10a relie la membrane 6 à la canalisation 2. Le rivet 9 est taré de telle manière que lorsque la pression dans la canalisation 2, en aval de la vanne de régulation de pression 4, est supérieure à une pression prédéterminée, le rivet 9 se casse, libérant ainsi la membrane métallique 6 et permettant une décharge du fluide chaud sous pression circulant dans la canalisation 2 à travers le puits 5.

Selon l'invention, la membrane 6 est prévue au voisinage de la paroi 1 de la nacelle et en regard de celle-ci de telle manière que le jet de fluide 11 éventuellement libéré par le clapet de surpression 3 soit dirigé vers la paroi 1. A l'endroit de l'impact du jet de fluide 11 sur la paroi 1, il est prévu sur celle-ci, un orifice 12 obturé par un bouchon consomptible 13 formé par un treillis métallique 14 enrobé dans un matériau fusible 15, du silicone de préférence, destiné à fondre, au moins en partie, sous l'action de la chaleur dégagée par le jet de fluide chaud 11 libéré par le clapet de surpression 3. Le bouchon est fixé sur la paroi 1 par des vis par exemple, ou par tout autre moyen. Naturellement la température du jet de fluide 11 doit être supérieure à la température de fusion du matériau fusible 15, c'est-à-dire supérieure à 250°C si le matériau fusible est du silicone.

La paroi 1 de la nacelle comporte, de plus, du côté de sa face interne 16, un manchon 17 qui s'étend perpendiculairement à la paroi 1 et dont une extrémité 18 entoure l'orifice 12 et dont l'autre extrémité 19, éloignée de la paroi 1 est au voisinage de la membrane métallique 6 et entoure celle-ci. Grâce à ce manchon, le jet de fluide 11 éventuellement libéré par le clapet de surpression 3 n'est pas en contact avec les équipements divers avoisinants et en particulier les câblages électriques.

Le fonctionnement du dispositif se comprend aisément : en cas de surpression dans la canalisation 2, par suite d'une défaillance de la vanne de régulation 4, le rivet taré 9 se rompt et la membrane métallique 6 est projetée vers l'orifice 12 de la nacelle, libérant ainsi un jet de fluide 11 dirigé vers la paroi 1 à l'endroit du bouchon consomptible 13. Le silicone 15 enrobant le treillis métallique 14 fond sous l'effet de la chaleur dégagée par le jeu de fluide 11 provoquant ainsi un trou 20, ou section de passage, dans le bouchon consomptible 13 par lequel le jet de fluide 11 s'échappe dans l'atmosphère.

Lors de l'escale de l'aéronef, une simple inspection visuelle de la nacelle permet de détecter la panne. Après réparation des causes de la défaillance du circuit et enlèvement du treillis métallique 14, la membrane métallique 6 est remise en place et fixée à l'aide d'un nouveau rivet 9 et l'orifice 12 est de nouveau obturé par un nouveau bouchon consomptible 12.

## Revendications

1. Dispositif pour évacuer dans l'atmosphère un jet de fluide (11) éventuellement libéré par un clapet de surpression (3) prévu dans un circuit de fluide chaud sous pression d'un aéronef reliant une source chaude constituée par un prélevement sur un moteur à un point d'utilisation, caractérisé en ce que
le clapet de surpression (3) est disposé près, et à l'intérieur de la paroi (1) de la nacelle, qui enveloppe ledit moteur, de telle manière que l'éventuel jet de fluide (11) libéré par ledit clapet (3) soit dirigé vers ladite paroi (1) et en ce qu'il est prévu dans ladite paroi (1) à l'endroit de l'impact dudit jet (11), un orifice (12) obturé par un bouchon consomptible (13) destiné à fondre au moins partiellement sous l'action de la chaleur dégagée par ledit jet (11), permettant alors l'évacuation dudit jet (11) par au moins une partie dudit orifice (12).

2. Dispositif selon la revendication 1 caractérisé en ce qu'un bouchon consomptible (13) est constitué d'un treillis métallique (14) noyé dans un matériau fusible (15).

3. Dispositif selon la revendication 2 caractérisé en ce que le matériau fusible est du silicone.

4. Dispositif selon l'une quelconque des revendications 1 à 3, caractérisé en ce que le voisinage du jet de fluide (11) est protégé à l'aide d'un manchon (17) solidaire de la paroi (1) de la nacelle et dont une extrémité (18) entoure ledit orifice (12) et dont l'autre extrémité (19) est au voisinage du clapet de surpression (3).

## Patentansprüche

1. Vorichtung zum Auslassen eines Fluidstrahls (11) in die Atmosphäre, der eventuell durch ein Überdruckventil (3) freigegeben wird, das in einem unter Druck stehenden heiβen Fluidkreis eines Flugzeugs vorgesehen ist, der eine von einem Abgriff an einem Motor gebildete heiße Quelle mit einem Verbrauchspunkt verbindet,
**dadurch gekennzeichnet**,
daß das Überdruckventil (3) in der Nähe und innerhalb der Wandung (1) der den Motor umschließenden Gondel so angeordnet ist, daß der durch das Ventil (3) freigegebene eventuelle Fluidstrahl (11) auf diese Wandung (1) gerichtet wird,
und daß in der Wandung (1) an der Aufprallstelle des Fluidstrahls (11) eine Öffnung (12) vorgesehen ist, die von einem verbrauchbaren Stopfen (13) verschlossen ist, der dazu bestimmt ist, unter der Einwirkung der von dem Fluidstrahl (11) freigegebenen Wärme wenigstens teilweise zu schmelzen, und der dann das Auslassen des Fluidstrahls (11) durch zumindest einen Teil der Öffnung (12) ermöglicht.

2. Vorichtung nach Anspruch 1, dadurch gekennzeichnet, daß ein verbrauchbarer Stopfen (13) aus einem Metallgitter (14) besteht, das in ein schmelzbares Material (15) eingebettet ist.

3. Vorichtung nach Anspruch 2, dadurch gekennzeichnet, daß das schmelzbare Material aus Silikon besteht.

4. Vorichtung nach einem der Ansprüche 1 bis 3, dadurch gekennzeichnet, daß die Umgebung des Fluidstrahl (11) mit Hilfe einer fest mit der Wandung (1) verbundenen Buchse (17) geschützt ist, die mit einem Endbereich (18) die genannte Öffnung (12) umschließt und deren anderer Endbereich (19) in der Nähe des Überdruckventils (3) liegt.

## Claims

1. Device for discharging to atmosphere a jet of fluid (11) possibly released by an excess-pressure blow-off valve (3) fitted in a circuit of hot fluid under pressure of an aircraft, connecting a source of heat constituted by a draw-off from an engine to a point of use, characterised in that the excess-pressure blow-off valve (3) is placed near to and inside the wall (1) of the pod surrounding the said engine, in such a manner that the possible jet of fluid (11) released by the said valve (3) is directed towards the said wall (1) and in that there is provided in the said wall (1) at the point of impact of the said jet (11), an orifice (12) closed off by a consumable plug (13) designed to melt at least partially under the action of the heat given off by the said jet (11), thus allowing the discharge of the said jet (11) through at least a part of the said orifice (12).

2. Device in accordance with Claim 1 characterised in that a consumable plug (13) is constituted by a metal mesh (14) encapsulated in a fusible material (15).

3. Device in accordance with Claim 2 characterised in that the fusible material is silicon.

4. Device in accordance with any of Claims 1 to 3 characterised in that the area around the jet of fluid (11) is protected by means of a sleeve (17) fixed to the wall (1) of the pod and of which one end (18) surrounds the said orifice (12) and the other end (19) lies in the area of the excess-pressure blow-off valve (3).
